Europäisches Patentamt

(19) European Patent Office

Office européen des brevets

(11) Publication number: **0 034 014**
**A1**

(12) # EUROPEAN PATENT APPLICATION

(21) Application number: **81300358.9**

(22) Date of filing: **27.01.81**

(51) Int. Cl.³: **G 03 B 21/11**

---

(30) Priority: **08.02.80 GB 8004254**

(43) Date of publication of application: **19.08.81**
**Bulletin 81/33**

(84) Designated Contracting States: **DE FR GB NL**

(71) Applicant: **Page, Charles James, 1 De Crespigny Park Denmark Hill, London SE5 (GB)**

(72) Inventor: **Page, Charles James, 1 De Crespigny Park Denmark Hill, London SE5 (GB)**

(74) Representative: **Jones, Graham H., Graham Jones & Company 48 Mereworth Drive Shooters Hill, London SE18 3EE (GB)**

(54) **Storage apparatus for photographic microform recordings.**

(57) Storage apparatus (2) for photographic microform recordings, which storage apparatus comprises a plurality of axially aligned storage drums (4), and roller means (6) which engage the periphery of the drums and which rotatably support the drums about a common longitudinal axis, each drum comprising a plurality of pockets (8), each pocket having an open mouth for enabling a photographic microform recording to be inserted into and removed from the pocket, and the storage apparatus including guard means (10) for preventing the microform recording from falling out of the pockets as the drums rotate.

## STORAGE APPARATUS FOR PHOTOGRAPHIC MICROFORM RECORDINGS

This invention relates to storage apparatus for photographic microform recordings, the storage apparatus enabling the automated retrieval of the photographic microform recordings.

It is well known to utilise microform recording, especially of busines and legal documents, as a means for reducing the storage space required. However, in large organisations the total number of microform recordings can very soon become so large that the problem of subsequently retrieving a microform document image can be extremely time consuming.

Efforts have already been made to alleviate this problem by providing machines with varying degrees of automation for storing and retrieving microform recordings, especially microform recordings on flat photographic film commonly known as microfiche stored in a carousel revolving about a vertical axis. The majority of such known machines not only have a limited storage capacity, usually not more than several hundred microfiche, but they also require each separate microfiche to be encoded prior to insertion in the storage carousel by the attachment to the microfiche film of a magnetic data recording strip, or a metal coding bar, which also serves to support the microfiche film in the storage carousel. Not only do such encoding attachments increase the bulk and weight of the microfiche, thereby limiting the number which can be stored in an aparatus of acceptable size, but the operation of preparing, loading and unloading the microfiche is very time consuming and open to human error.

Microform recordings on photographic roll film commonly known as microfilm present different retrieval problems in that apparatus is known which will automatically locate a given image frame reference but the particular microfilm reel on which that image is recorded must first be identified, selected and inserted in the apparatus by the operator. Furthermore the roll of film is usually required to be wound into a special cassette, thereby increasing costs.

It is an aim of the present invention to provide storage apparatus for photographic microform recordings, which storage apparatus obviates or reduces the above mentioned problems.

Accordingly, this invention provides storage apparatus for photographic microform recordings, which storage apparatus comprises a plurality of axially aligned storage drums, and roller means which engage the periphery of the drums and which rotatably support the drums about a common longitudinal axis, each drum comprising a plurality of pockets, each pocket having an open mouth for enabling a photographic microform recording to be inserted into and removed from the pocket, and the storage apparatus including guard means for preventing the microform recording from falling out of the pockets as the drums rotate.

It will be apparent that since the drums are mounted on their outer periphery, the centre longitudinal axis of the drums can be kept free and the drums can thus easily be removed individually from the storage apparatus. If the drums were mounted on a central shaft, difficulties in removing the drums could be encountered. For example, if it were desired to remove an inner drum, the outer drums would first have to be removed and this would be time consuming. With the storage apparatus of the present invention and especially the way in which the drums are mounted, any drum can be removed at will without disturbing the other drums.

The roller means preferably comprises a plurality of rollers. At least one of which rollers may be driven to cause the storage drums to rotate. Alternatively, the storage drums may be adapted to be driven by a linear motor arrangement, the linear motor arrangement including a printed circuit part positioned on a side face of each of the drums.

The guard means may comprise a curved member positioned adjacent to the lower part of each drum.

Advantageously, the storage apparatus includes a chute for the guard means for controllably emptying the drums of their stored microform recordings.

The storage apparatus may include retrieval means for automatically retrieving the microform recordings from the pockets.

The storage apparatus may be one in which the retrieval means comprises a driven push rod, and in which each pocket has an end remote from its mouth which is sufficiently closed to retain  this microform recording but which allows the push rod to pass into the pocket to eject the microform recording. The push rod may be electrically, hydraulically or pneumatically driven.

The storage apparatus may include locating means for automatically locating a retrieved microform recording in a viewing position.

The locating means may comprise a first driven carriage which is adapted to move the location means adjacent a desired storage drum, a second driven carriage which is mounted on the first carriage and which is adapted to move a desired microform recording from the drum in a first direction, and a third driven carriage which is mounted on the second carriage and which is adapted to move the microform recording in a second direction.

The carriages may be powered by one or more linear motors.

The storage apparatus may include an optical viewing system.

The storage apparatus may also include relocating means for relocating a microform recording in its pocket in its drum when the microform recording has been read. The relocating means may comprise a gripper mechanism.

The storage apparatus may include feeder means for initially feeding the microform recordings into the pockets in the drums. These microform recordings may be fed to appropriate storage locations which are automatically recorded in a memory device.

The storage apparatus may include a photocopying device for providing a print out of any selected microform recording.

The storage apparatus may include a microprocessor for providing storage position location encoding of the microform recording.

The storage apparatus may also include a microprocessor for providing discrete microform recording position location encoding.

The storage apparatus may also include means responsive to appropriate command signals to activate the microform recording retrieval means to cause it to withdraw a desired microform recording from its pocket and eject it completely from the pocket, whereby corresponding position indicating data of the ejected microform recording is erased from an index data store.

Embodiments of the invention will now be described solely by way of example and with reference to the accompanying drawings in which:

Figure 1 is a side view of storage apparatus in accordance with the invention;

Figure 2 is an enlarged end view of part of the storage apparatus shown in Figure 1;

Figure 3 is side view of part of the film location apparatus;

Figure 4 is a plan view of location apparatus for use with microfilms; and

Figure 5 is a block diagram showing part of the electrical circuitry required for the storage apparatus illustrated in Figure 1.

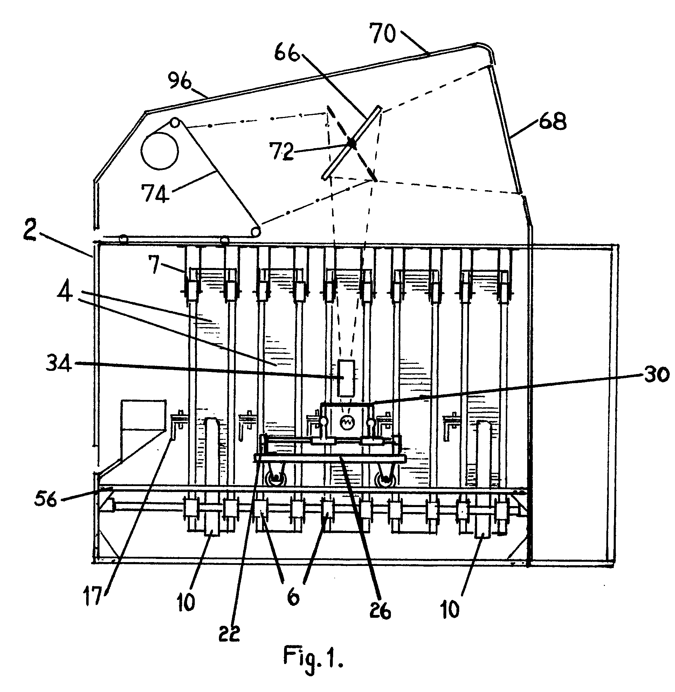

Referring to Figures 1-3 there is shown storage apparatus 2 for storing photographic microform recordings in the form of sheets of microfiche film. The apparatus 2 comprises a plurality of axially aligned storage drums 4 and roller means in the form of a plurality of rollers 6 which engage the periphery of the drums 4 and which rotatably support the drums 4 about a common longitudinal axis as shown most clearly in Figure 1.

Each drum 4 comprises a plurality of pockets 8 and each pocket has an open mouth for enabling one of the sheets of microfiche film to be inserted into and removed from the pocket.

It will be apparent that as the drums 4 rotate, the sheets of microfiche film could fall out of the pockets 8 as the pockets 8 in the drums 4 approach the lower most position of the drums 4. Accordingly, the apparatus 2 is further provided with guard means in the form of a curved member 10 for each of the drums 4, each curved member 10 being positioned over the bottom periphery of its drum 4. For simplicity in Figure 1, the curved members 10 are only shown in position on each of the end drums 4. It will be apparent that as the individual pockets 8 get to a position in which the sheet of microfiche film in the pocket 8 tends to fall out of the pocket 8, the pocket will by this time be adjacent the member 10 and if the sheet of microfiche film does tend to fall out of its pocket, then it will merely engage the inner surface of the member 10 and will thus be prevented from completely falling out of its pocket. As each individual pocket 8 rises in height as the drums 4 continue to rotate, the sheet of microfiche film in each pocket 8 will fall back into its pocket. The member 10 is arranged to be sufficiently long that the sheets of microfiche film will be tending to fall back into their pockets 8 by the time that the individual pockets 8 have traversed the length of the member 10.

Advantageously, the member 10 is provided with a removable section 12. If this section is removed and it is replaced by a chute 14, then the sheets of microfiche film in the pockets 8 can be allowed to fall out of the pockets 8 and along the chute into a collecting container (not shown) under gravity. The chute 14 thus facilitates the speedy emptying of the drum 4 whenever desired.

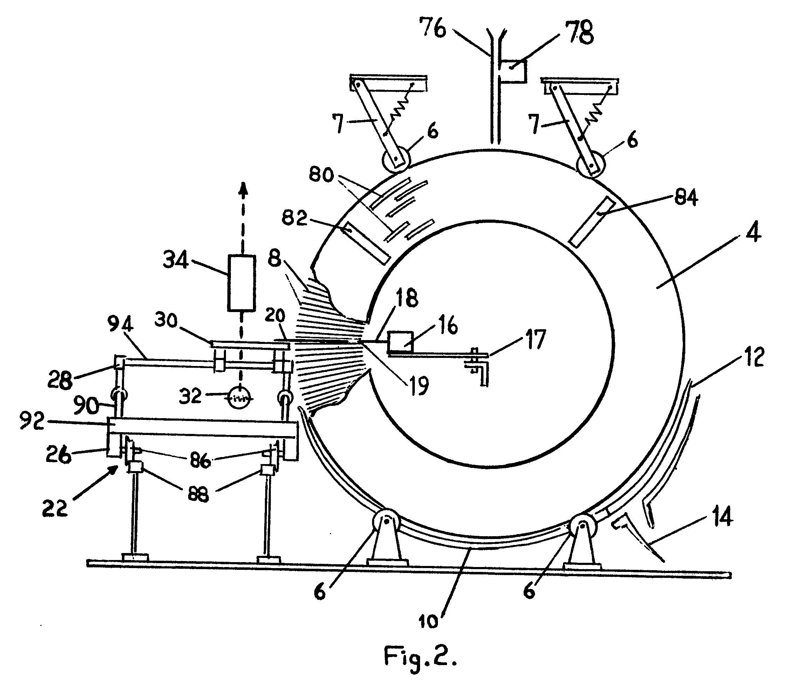

The construction of the storage drums 4 and the rollers 6 permit easy removal or insertion of a drum 4 from or into the storage apparatus 2. The apparatus 2 may have a cabinet housing which is provided with access through doors or removable panels over the complete height of the drums 4 and on the side of the cabinet housing opposite to a location means 22 described hereinbelow. Before removing a loaded drum 4, a flexible belt (not shown) is secured around the periphery of the drum 4 to prevent the sheets of microfiche film in the drum 4 from falling out. The belt preferably has a clip at one end which is attached to one of the pocket dividers. The drum 4 may then be rotated by hand to draw the belt around the drum. After a complete rotation, the belt is secured by a clip or buckle. The upper drum mounting rollers 6 are then lifted clear of the drum 4 by folding up their spring loaded carrying arms 7 (see Figure 2). A solenoid 16 with a push rod 18 is then swung clear of the central aperture of the drum 4 on its pivotal mounting 17. The drum 4 can then be simply lifted clear of the bottom mounting rollers 6.

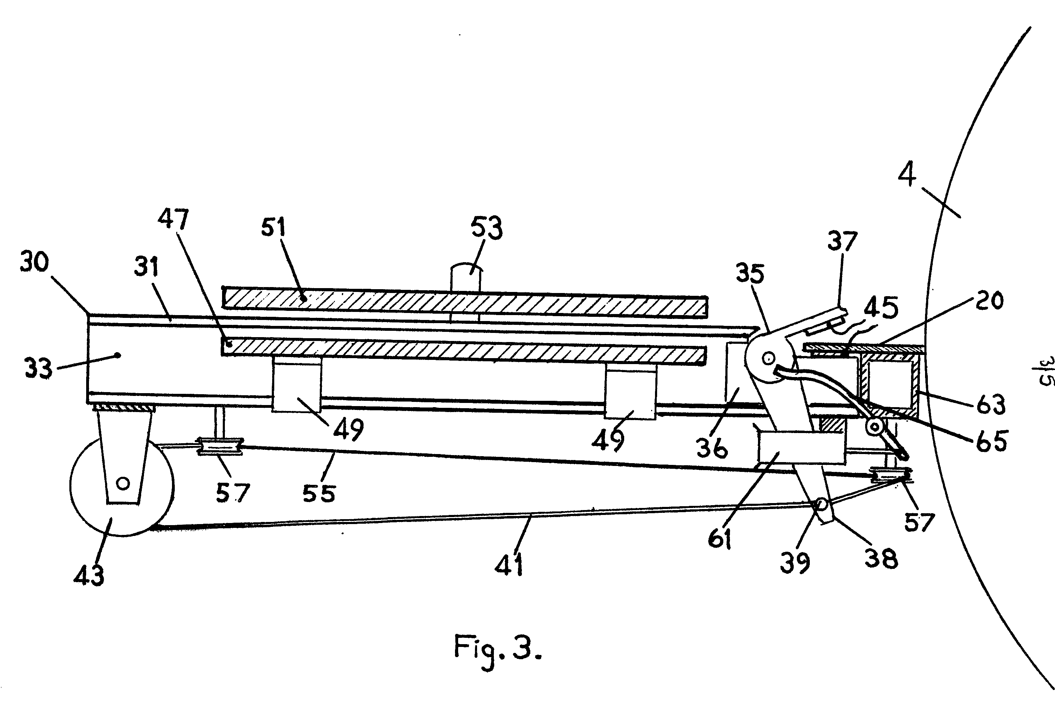

The apparatus 2 is provided with retrieval means for automatically retrieving the sheets of microfiche film from the pockets 8. The retrieval means comprises the solenoid 16 and the push rod 18. The push rod 18 enters the pockets 8 from their inner end 19 which is remote from the open mouths of the pockets 8 and when the solenoid 16 is activated, the rod push 18 is effective to push a sheet of microfiche film 20 as shown in Figures 2 and 3 out of the pocket 8. The film 20 can then fall onto the location means 22 as shown most clearly in Figure 1 for automatically locating a retrieved sheet of microfiche in a viewing position. The location means 22 is mounted on a linear motor not shown. The location means 22 comprises a first driven carriage 26 which is adapted to position the location means adjacent a desired storage drum 4. The location means 22 also comprises a second driven carriage 28 which is mounted on the first carriage 26 and which is adapted to move a desired sheet of microfiche film 20 from the drum 4 in a first direction in the optical path of an optical viewing system as shown in Figure 2. The location means 22 further comprises a third carriage 30 which is mounted on top of the carriage 28 and which is adapted to move the sheet of microfiche film 20 in a second direction in the optical path of the optical viewing system. The optical viewing system comprises a light source 32 which is positioned in the carriage 28 and it illuminates the sheet of microfiche film 20 when it is positioned on the top of the carriage 30. The light source 32 then shines light through the microfiche film 20 to a projection lens 34 which also forms part of the optical viewing system.

The third carriage 30 carries a microfiche film gripper mechanism for completely withdrawing the sheet of microfiche film 20 from its storage pocket 8, placing it in the optical viewing position on the top of the carriage 30, and subsequently returning it to its storage pocket 8.

The arrangement of the gripper mechanism on the carriage 30 is shown in detail in Figure 3, but the supporting members by which the carriage 30 is mounted on the second carriage 28 have been omitted for clarity. The carriage 30 has a rectangular frame of which the two opposing side members 31 are of rectangular section with the inner face open to form a rectangular channel 33 in which a microfiche film gripper 35 can slide longituidinally. The film gripper 35 comprises a runner block 36 on which is pivotally mounted a gripper arm 37 contiguous with a depending operating arm 38. The operating arms 38 of the film grippers 35 sliding in the opposing frame members 31 are joined near their lower extremities by a connecting rod 39. To the centre of the rod 39 is connected a drawline 41 which is wound onto an electric powered winch drum 43 to draw the film grippers 35 towards the film viewing position. Initial movement of the drawline 39 pivots the
operating arm 38 to close the gripper arm 37 onto the
microfiche film 20 which have been partially ejected from its
pocket 8 in the drum 4 by the push rod 18 to the position
shown in Figure 3. The leading edge of the microfiche film 20
is now firmly gripped by soft gripper pads 45 and the gripper
arm 37 is in a position parallel to the runner block 36. The
overall heigh of the gripper mechanism 35 in this position
enables it to be a sliding fit in the channel 33. Further
motion of the drawline 41 draws the microfiche film 20
completely from the drum 4 into a position overlaying a lower
optical glass plate 47 which is fixed in spaced relationship
to the frame side members 31 by support brackets 49 attached
to the underside of the side members 31. With the microfiche
film 20 in position above the lower glass plate 49, an upper
glass plate 51, which is supported by armatures 53 of
solenoids secured to the outer faces of the side members 31,
is lowered onto the microfiche film 20 to sandwich it
optically flat between the two glass plates 47, 51 in the
focal plane of a projection lens 34 (see Figure 2). After
viewing is completed, the top glass plate 51 is lifted clear
of the microfiche film 20 by the solenoids 53 and the return
motion of the microfiche film 20 is effected by reversing the
winch drum 43 drive to wind on return drawlines 55 which are
guided along the length of the side frame members 31 by
pullies 57 and secured to the outer extremities of the
connecting rod 39 so that during viewing they do not obstruct
the optical path. Initial motion of the return drawlines 55
draws the gripper mechanisms 35 along the side channels 33 towards the drum 4.

As the gripper arms 37 clear the top wall of the side members
31, further motion of the drawline 55 opens the gripper
mechanisms 35 and the microfiche film 20 is redeposited into
the position illustrated in Figure 3. At this point a
solenoid 61, mounted centrally below a front frame member 63,
is energised to actuate a pusher arm 65 which in its arcuate
sweep through a slot cut in the front frame member 63 contacts
the rear edge of the microfiche film 20 and completely pushes
it into its storage pocket 8 in the drum 4.

Referring to Figure 1, it will be seen that during
viewing of the microfiche film 20, the projection lens 34
projects the image from the film 20 up to a mirror 66 which
then projects the image on to a viewing screen 68 at the front
part of a housing 70. The mirror 66 pivots about a pivot 72
so that it can be tilted to the position shown in dotted lines
when print out can be effected on a roll of paper 74 if
desired.

Referring now back to Figure 2, it will be seen that
adjacent the apex of each drum 4 is an insertion slot 76 for
inserting sheets of microfiche film 20. The slot 76 is
associated with a code scanning assembly 78 which scans
identification and image position codes on the film 20 as the
film 20 falls through the slot 76 into one of the pockets 8 in
the drum 4.

On a side wall of the drums 4, are located light
reflective position indicating strips 80. These strips 80
co-operate with a position detector assembly 82 to accurately locate the required pocket 8 at the retrieval position adjacent the rod 18. The strips 80 also co-operate with a further position detector assembly 84 to accurately locate an empty pocket 8 opposite the slot 76 so that the pocket 8 is ready to receive the film 20.

As shown in Figure 2, the carriage 26 runs on wheels 86. The wheels 86 run along parallel guide rails 88. Further parallel guide rails 90 are mounted on the top surface of the a platform 92 of the first carriage 26. The second carriage 28 can move on the rails 88 in the same direction as the carriage 26. The carriage 28 incorporates parallel guide rails 94. The carriage 30 is mounted on rails 94 and it is adapted to receive the film 20 as indicated above. The carriage 30 moves along the rails 94 in a direction normal to the movement of the second carriage 28.

In operation of the apparatus 2, the carriage 26 is first aligned opposite a desired one of the drums 4 that has been selected by a retrieval controlling system. The drum 4 will then be rotated to bring the desired pocket 8 level with the carriage 30. A chosen sheet of microfiche film 20 will then be obtained as indicated above.

Although the apparatus 2 has been described above as having sheets of microfiche film 20 in the pockets 8, it is to be appreciated that the apparatus 2 can also store rolls of microfilm. The apparatus 2 may be such that, for example, more than 1,000 microfiche sheets of material per drum 4, or more than 100 reels of microfilm material per drum 4, may be stored. As shown in Figure 1, the apparatus 2 is provided with a cover 96 so that the photographic microform recordings may be stored in a fully dust sealed controlled atmosphere.

The automatic indexing of the microfiche film 20 allows random addition to or replacement of stored items by new items. No tagging of the film 20 is required before insertion into the pockets 8. Indexing of the film 20 is advantageously effected by an inbuilt microprocessor, not shown. The microprocessor preferably has an interface facility with an external computer.

As indicated above, the retrieval of the film 20 is automatic. Any desired frame of the film 20 may be automatically presented to the viewing apparatus. When a sheet of the film 20 has been looked at, it can be automatically refiled into the appropriate pocket 8.

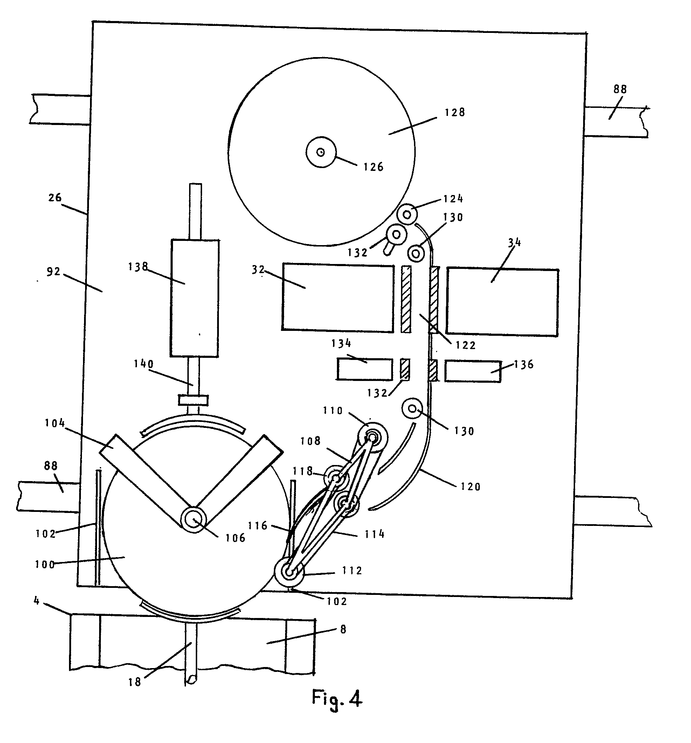

The apparatus 2 may be easily modified to store reels of microfilm instead of sheets of microfiche. For reels of microfilm, the drums 4 are arranged in the same axially aligned configuration as shown in Figure 1 for the storage of the michofiche film 20, with the location means 22 running on the parallel rails 88. The constructional differences are firstly that the pockets 8 and the insertion slots 76 are of a dimension large enough to accommodate a reel of 16mm microfilm laid flat on its side. Secondly, the solenoid operated rod 18 must be long enough to completely eject a film reel 100 (see Figure 4) from the pocket 8. Thirdly, the location means 22 does not require the bidirectional movement carriages 28 and 30. The roll film locating, winding and display mechanisms are all mounted on the platform 92 of the first carriage 26 as shown in Figure 4.

Referring now especially to Figure 4, the film reel 100 ejected from the pocket 8 is guided by ribs 102 to lay flat between the surface of the platform 92 and raised support arms 104 which carry at the underside of their apex a spring loaded ball bearing 106. The ball bearing 106 locates in the central spindle drive hole of the film reel 100. A film-end pick-up mechanism 108 pivots about the spindle of a vertically mounted electric motor 110 and is spring urged towards the film reel 100 so that its outermost soft tyred roller 112 driven by the motor 110 via an endless belt 114, is urged against the outer surface of the roll film wound on the reel 100. This rotates the reel 100 in an anti-clockwise direction until the cut end of the film engages a film pick-up arm 116 which guides the film between belt driven pinch rollers 118. These pinch rollers 118 in turn drive the end of the film against a curved guide 120 and thence through an open projection gate 122 to a second pair of driven pinch rollers 124. The pinch rollers 124 then urge the film end into a boss 126 of a film take-up spool 128. The tension applied to the film by the driven take-up spool 128 draws the film onto gate end rollers 130 and also against a spring loaded roller 132 of the pinch rollers 124, thereby forcing these rollers 124 apart and disconnecting their drive. The tension on the film between the loaded reel 100 and the leading gate end roller 130 also causes the film to adopt a straight line between these points

thereby lifting the take-up mechanism 108 away from the reel 100 and likewise disconnecting its drive motor 110.

At the same time, a secondary film gate 132 is closed. A secondary lamp 134 is switched on and a photoelectric cell assembly 136 monitors the image position codes recorded on the film, transmitting its output to an electronic control system, not shown. When the desired image frame is found, the film drive is stopped, the projection gate 122 is closed, the projection lamp 32 is switched on and the film image is projected through the lens system 34.

When viewing is completed, a rewind-drive motor is energised to first extend a retractible drive spindle into the central drive hole of reel 100 and secondly to rotate reel 100 in a clockwise direction to rewind the film onto it. When this operation is completed, the retractible drive shaft is retracted clear of the reel and a solenoid 138 is energised to cause a push rod 140 to push the reel 100 back into its pocket 8 of the drum 4.

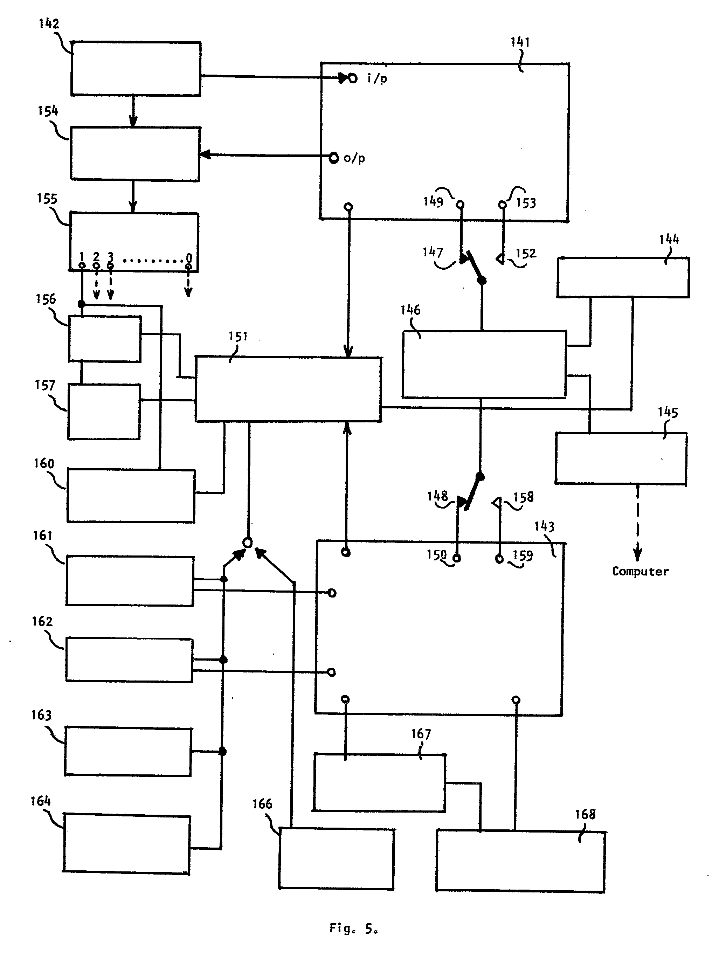

Referring now to Figure 5, there is shown block diagram form an automatic indexing and retrieval control system for microfiche or microfilm. The system is advantageously constructed on microprocessor principles and it contains three discrete data memories. A storage drum address memory 141 stores the coded address of a drum member and the pocket number of each fiche/roll film stored in the unit associated with each storage drum as the film/fiche is inserted into its storage pocket. The addresses are automatically derived from a drum code reader 142. An image position address memory 143 stores the coded position of each discrete image on each fiche/film stored in the unit. These addresses may also be automatically derived provided that the fiche/film has recorded on it a machine readable code. Alternatively the image addresses may be input into the memory 143 manually through a keyboard 144 whilst viewing the images on the screen. Alternatively, if the images positions have been recorded at the time of filming and converted to a data code then they may be fed into the memory 143 via a data terminal interface 145. Both the keyboard 144 and the data terminal interface 145 are connected to a retrieval code distributor 146 which splits the complete address into its drum address and image address portions and transmits them respectively via switches 147 and 148 to recording input terminals 149 and 150 of the memories 141 and 143. The third memory is a operational function program memory 151 which contains all switching sequences to ensure the correct chain of mechanical functions.

To retrieve a desired image stored in the system, the document code is either received from the computer via the data terminal interface 145 or is manually input via the keyboard 144 to the retrieval code distributor 146 through which it is routed via switch 152 to an interogation terminal 153 of storage drum access memory 141 which indicates the drum required and the pocket in which the desired fiche/film is stored. The drum/pocket code is fed to a code comparator 154 and to the operational function program memory 151 under whose control a drum drive selector 155 is caused to select the correct drum drive circuit 156 and to start the drum rotating. The drum code reader 142 continually scans the rotating drum codes and feeds them to the comparator 154. When the desired code is reached, the drum drive 156 is stopped and a fiche/film ejector 157 actuated. Whilst the foregoing is happening, the retrieval code distributor 146 has also routed the required document code via a switch 158 to an interogation terminal 159 of the image position address memory 143 to retrieve X and Y coordinates for a fiche image or the frame count for a roll film image.

Considering the fiche image finding procedure first, in this case the drum drive selector 155 has already caused a location carriage drive 160 to position the carriage opposite the chosen drum so that it is in position when the fiche/film ejector 157 is actuated to place the fiche in the viewing position. The location carriage drive is reactivated to bring it into the optical viewing position, dependent on the drum selected. The X-cordinate drive 161 is then actuated by the program memory 151 to bring the desired fiche image column into the optical path. The Y-coordinate drive 162 is then actuated by the program memory 151 to bring the desired fiche image row into the optical path. At this point, the desired document image is centered in the optical path and the program memory 151 switches on a projection lamp 163 to display the image. After the image has been read, the operator presses a 're-set' key on the keyboard and the X and Y coordinate drives 161, 162 return the fiche carrier to the normal position and the location carriage is repositioned opposite the appropriate drum. The fiche re-insertion drive 164, is then actuated to return the fiche
to its pocket under control of the program memory 151 which
then returns itself to the 'Start' position and cancels the
retrieved address codes at the outputs of both the drum
address memory 141 and the image position address memory 143,
making them both ready to receive the next request.

In the case of roll film, the location carriage is
positioned opposite the selected drum, as before, and the
selected reel is ejected from its pocket onto the carriage,
which under control of the program memory 141 is then driven
to connect with a roll film drive 166 which then rapidly winds
the film past an image code reader 167 whose output is
continuously compared in a comparator 168 with the address
code retrieved from the memory 143. When parity is needed,
the film drive 166 is stopped and the projection lamp 163
switched on. After viewing, the operator presses the
're-set' key on the keyboard 144, the film is then rewound by
the film drive 166, the location carriage drive 160 is
activated to return the carriage opposite the selected drum,
and the reinsertion drive 164 is actuated to return the film
to its pocket. The program memory 151 then restores itself to
the 'Start' position and cancels the code output of both the
address memories 141 and 143.

The process of completely ejecting a fiche/film from the
store is occasioned by pressing a specific command key on the
keyboard 144 which selects a reject program in the memory 151,
the last function of which is to erase the selected addresses
from the memories 141 and 143. Other non-viewing functions such as causing a print-out to be made may be actuated by specific command keys on the keyboard 144 after the normal image location procedure.

In the case of a storage unit equipped with electronic image viewing via remote visual display units, all functional commands may be transmitted to the storage unit from a visual display unit keyboard via the data terminal interface 145. In this case it may be advantageous to have certain instructional texts recorded in the function memory 151, which could be transmitted to the calling visual display unit to inform the visual display unit operator that he, for example, could or could not (engaged) proceed with his request.

It is to be appreciated that the embodiments of the invention described above have been given by way of example only and that modifications may be effected. For example, the optical viewing system could be a mixture of optical and electronic equipment or purely electronic. If an electronic viewing system is employed, it may be linked to an on-line network to permit viewing on any linked visual display unit. The hard copy print out facility indicated above can be arranged to work with any viewing system. Further, the viewing system may be such that it can accommodate different sizes of microfiche or microfilm and, if necessary, different sets of viewing systems can be installed in the apparatus 2 so that an appropriate viewing system can be used for the microfiche or microfilm being read. The different sets of viewing systems could be mounted on a turret with a zoom lens.

WHAT I CLAIM IS

1.    Storage apparatus for photographic microform recordings, which storage apparatus comprises a plurality of axially aligned storage drums, and roller means which engage the periphery of the drums and which rotatably support the drums about a common longitudinal axis, each drum comprising a plurality of pockets, each pocket having an open mouth for enabling a photographic microform recording to be inserted into and removed from the pocket, and the storage apparatus including guard means for preventing the microform recording from falling out of the pockets as the drums rotate.

2.    Storage apparatus according to claim 1 in which the roller means comprises a plurality of rollers, at least one of which rollers is driven.

3.    Storage apparatus according to claim 1 in which the roller means comprises a plurality of rollers, and in which the storage drums are adapted to be driven by a linear motor arrangement, the linear motor arrangement including a printed circuit part positioned on a side face of each of the drums.

4.    Storage apparatus according to any one of the preceding claims in which the guard means is a curved member positioned adjacent to a lower part of each drum.

5.   Storage apparatus according to any one of the preceding claims including a chute for the guard means for controllably emptying the drums of their stored microform recordings.

6.   Storage apparatus according to any one of the preceding claims including retrieval means for automatically retrieving the microform recordings from the pockets.

7.   Storage apparatus according to claim 6 in which the retrieval means comprises a driven push rod, and in which each pocket has an end remote from its mouth which is sufficiently closed to retain the microform recording but which allows the push rod to pass into the pocket to eject the microform recording.

8.   Storage apparatus according to claim 6 or claim 7 including location means for automatically locating a retrieved microform recording in a viewing position.

9.   Storage apparatus according to claim 8 in which the location means comprises a first driven carriage which is adapted to move the location means adjacent a desired storage drum, a second driven carriage which is mounted on the first carriage and which is adapted to move a desired microform recording from the drum in a first direction, and a third driven carriage which is mounted on the second carriage and which is adapted to move the microform recording in a second direction.

10. Storage apparatus according to claim 9 in which the carriages are powered by one or more linear motors.

11. Storage apparatus according to any one of the preceding claims including an optical viewing system.

12. Storage apparatus according to any one of the preceding claims including relocating means for relocating a microform recording in its pocket in its drum when the microform recording has been read.

13. Storage apparatus according to claim 12 in which the relocating means comprises a gripper mechanism.

14. Storage apparatus according to any one of the preceding claims including feeder means for initially feeding the microform recordings into the pockets in the drums.

15. Storage apparatus according to any one of the preceding claims including a photocopying device for providing a print-out of any selected microform recording.

16. Storage apparatus according to any one of the preceding claims including a microprocessor for providing storage position location encoding of the microform recordings.

-23-

17. Storage apparatus according to any one of the preceding claims including a microprocessor for providing discrete microform recording position location encoding.

18. Storage apparatus according to claim 6 or to claim 6 and any claim when appendant on claim 6 including means responsive to appropriate command signals to activate the microform recording retrieval means to cause it to withdraw a desired microform recording from its pocket and eject it completely from the pocket, whereby corresponding position identification data on the ejected microform recording is erased from an index data store.

19. Storage apparatus for photographic microform recordings, substantially as herein described with reference to the accompanying drawings.

Fig. 1.

1/5

0034014

Fig.2.

Fig. 3.

Fig. 4

5|5

Fig. 5.

0034014

Application number

# EUROPEAN SEARCH REPORT

European Patent Office

EP 81 30 0358.9

## DOCUMENTS CONSIDERED TO·BE RELEVANT

| Category | Citation of document with indication, where appropriate, of relevant passages | Relevant to claim |
|---|---|---|
| | Patents Abstracts of Japan<br>Vol. 2, No. 125, 20 October 1978<br>page 7463E78<br>& JP - A - 53 - 91735<br>--- | 1 |
| | Patents Abstracts of Japan<br>Vol. 1, No. 116, 4 October 1977<br>page 4413E77<br>& JP - A - 52 - 47662<br>--- | 1 |
| | Patents Abstracts of Japan<br>Vol. 2, No. 143, 25 November 1978<br>page 8972E78<br>& JP - A - 53 - 110441<br>--- | 1 |
| | US - A - 3 349 668 (C.E. ZWEIDINGER)<br>* fig. 1 to 5 *<br>--- | 1 |
| | FR - A - 623 164 (M.-L. BRANGER)<br>* fig. 1 *<br>--- | 1 |
| | DE - B2 - 2 048 678 (J. WEBER)<br>* column 2 *<br>--- | 1 |
| P | WO - A1 - 80/00378 (MICROFORM DATA SYSTEMS)<br>* fig. 1 *<br>--- | |
| A | US - A - 3 759 611 (R.P. O'CONNELL et al.)<br>----- | |

### CLASSIFICATION OF THE APPLICATION (Int. Cl.³)

G 03 B 21/11

### TECHNICAL FIELDS SEARCHED (Int. Cl.³)

G 03 B 21/00
G 03 B 23/00
G 03 B 27/00

### CATEGORY OF CITED DOCUMENTS

X: particularly relevant
A: technological background
O: non-written disclosure .
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 21-05-1981 | HOPPE |

EPO Form 1503.1  06.78